# FASCICULE DE BREVET EUROPEEN

(11) **EP 0 481 861 B1**
(45) Date de publication et mention de la délivrance du brevet: **05.06.1996**
(21) Numéro de dépôt: 91402727.1
(22) Date de dépôt: 11.10.1991
(51) Int. Cl.: G03B 27/20

(54) **Dispositif pour la reproduction d'images, par contact, sur un film photographique vierge à partir d'un original transparent**
Kontaktkopiervorrichtung zur Bildherstellung einer transparenten Vorlage auf photographischem Film
Contact copying device for image producing, on photographic film, from a transparent original

(30) Priorité: 15.10.1990 FR 9012686
(43) Date de publication de la demande: 22.04.1992
(73) Titulaire: Visage, Albert, F-45220 Chateaurenard (FR)
(72) Inventeur: Visage, Albert, F-45220 Chateaurenard (FR)
(74) Mandataire: Lemoine, Robert

(56) Documents cités:
- DE-A- 2 356 842
- FR-A- 1 072 870
- GB-A- 1 125 545
- US-A- 3 834 815

## Description

La présente invention concerne un dispositif pour la reproduction d'images, par contact, sur un film photographique vierge à partir d'un original transparent, notamment d'un négatif photographique ou d'une diapositive.

DE-A-2 356 842 décrit un dispositif de reproduction d'images du type indiqué ci-dessus, dans lequel la lumière émise par la source lumineuse doit traverser une plaque de verre pour impressionner le film photographique.

Or, pendant l'utilisation de ce dispositif, il arrive fréquemment que de fines particules de poussière se déposent sur la plaque de verre et affectent la qualité des images reproduites sur le film photographique à partir de l'original.

La présente invention remédie à cet inconvénient en proposant un dispositif de reproduction d'images selon la revendication 1.

Par ailleurs, comme une dépression est créée dans le dispositif entre l'original et le film, aucune bulle d'air n'est retenue entre ces derniers, ce qui permet d'améliorer la qualité des images reproduites.

Selon un mode de réalisation particulier de l'invention, les moyens presseurs sont constitués par une plaquette maintenue par des organes élastiques contre la face de la membrane qui est à l'opposé du film et de l'original.

Pour qu'elle puisse exercer sa fonction de pression dans les meilleures conditions, la plaquette porte sur sa face opposée à la membrane des tiges autour desquelles sont disposés des ressorts hélicoîdaux, ces tiges traversant librement un couvercle fixé sur la partie du corps qui est à l'opposé du joint tandis que les ressorts sont comprimés entre la plaquette et le couvercle.

De préférence, le couvercle et la membrane sont fixés sur le corps du châssis par des organes de fixation communs, ce qui permet de simplifier la structure du dispositif de reproduction et de réduire le prix de revient de ce dernier.

Avantageusement, le corps du châssis renferme autour de l'évidement une chambre tampon apte à être reliée à la source à vide, la partie du corps du châssis qui délimite la chambre de dépression étant pourvue d'une série d'orifices destinés à relier cette dernière à la chambre tampon.

La chambre tampon et les orifices la reliant à la chambre de dépression permettent d'uniformiser la dépression dans cette dernière, ce qui facilite d'élimination des bulles d'air retenues entre le film et l'original et améliore l'efficacité du dispositif de reproduction.

Un mode d'exécution de la présente invention sera décrit ci-après à titre d'exemple nullement limitatif en référence aux dessins annexés dans lesquels :
- la figure 1 est une vue en coupe schématique d'un dispositif de reproduction conforme à l'invention, la coupe étant effectuée selon la ligne I-I de la figure 2 et montrant le support et le châssis en position inactive ;
- la figure 2 est une vue en coupe schématique selon la ligne II-II de la figure 1 ;
- la figure 3 est une vue en coupe schématique selon la ligne III-III de la figure 1; et
- la figure 4 est une vue analogue à la figure 2 mais montrant le support et le châssis dans leur position active ;

Le dispositif représenté sur les dessins a été mis au point pour reproduire des images, par contact, sur un film photographique 1 à partir d'un original transparent 2 tel qu'un négatif photographique ou une diapositive.

Le film 1 et l'original 2 sont de conception classique et ne nécessitent pas d'être décrits ici. On précisera simplement qu'ils sont pourvus de perforations (non représentées) sur chacun de leurs côtés longitudinaux.

Le dispositif de reproduction conforme à l'invention comprend un support 3 pourvu d'une fenêtre rectangulaire 4, et un châssis 5 situé devant le support 3 et pourvu de moyens presseurs 6 dont le rôle sera décrit ci-après.

L'original 2 a des dimensions légèrement supérieures à celles de la fenêtre 4. I1 est destiné à être fixé sur le support 3 de façon à ce qu'il obture la fenêtre, sa fixation étant assurée en appliquant ses côtés longitudinaux perforés contre les côtés longitudinaux de la fenêtre et en l'immobilisant à l'aide de moyens appropriés (non représentés) tels qu'un ruban adhésif ou une glissière.

Le film 1, qui a sensiblement la même largeur que l'original 2, est inséré entre le support 3 et le châssis 5 de façon à ce qu'il s'étende parallèlement à l'original 2 tout en lui faisant face.

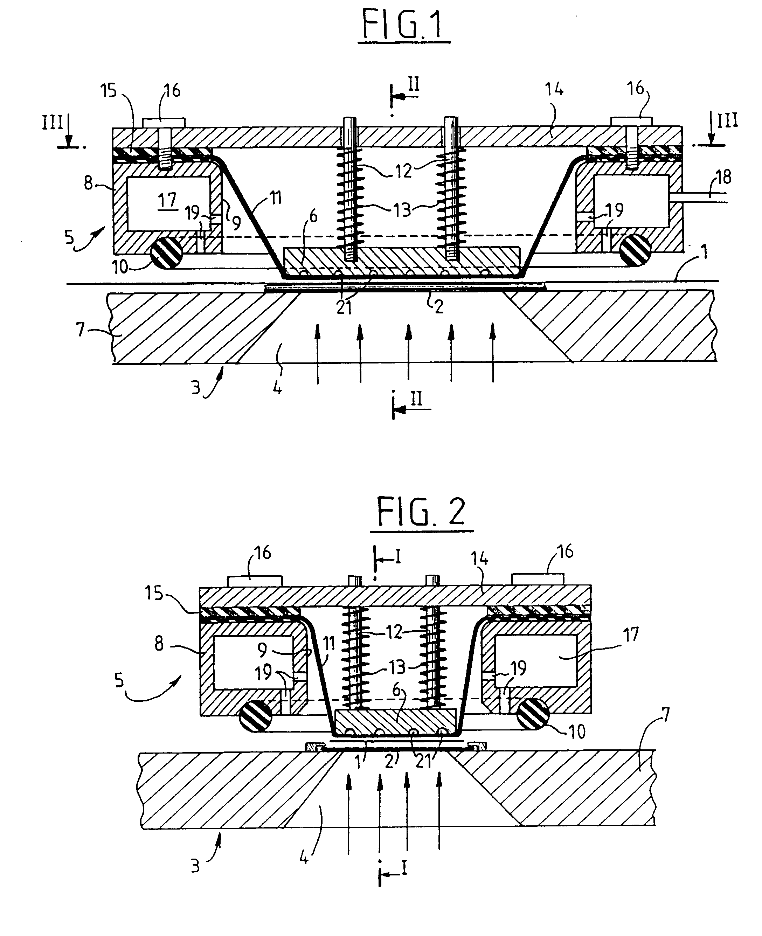

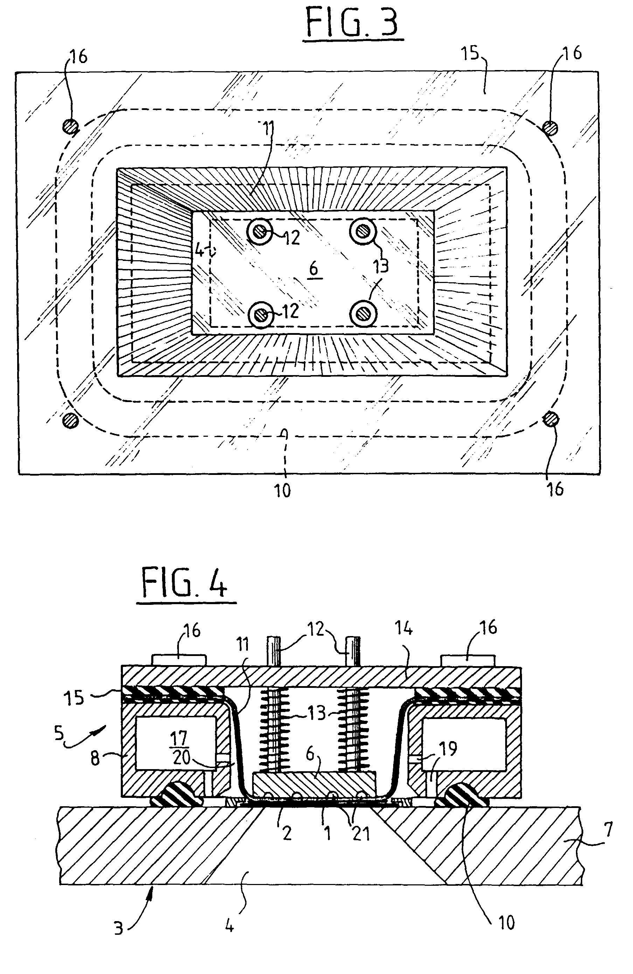

Le support 3 et le châssis 5 sont déplaçables l'un par rapport à l'autre entre une position inactive (visible sur les figures 1 et 2) dans laquelle les moyens presseurs sont sans action sur le film 1 et sur l'original 2, et une position active (visible sur la figure 4) dans laquelle les moyens presseurs 6 appliquent d'abord le film 1 contre l'original 2 puis celui-ci contre le support 3.

Le dispositif de reproduction conforme à l'invention comprend également des moyens pour créer une dépression entre l'original 2 et le film 1 lorsque le support 3 et le châssis 5 sont dans leur position active, et une source lumineuse (non représentée) du type de celle couramment utilisée en photographie, cette source étant située du côté du support 3 qui est opposé au châssis 5 afin d'impressionner le film 1 à travers l'original 2.

Comme on peut le voir sur les figures 1 à 4, le support 3 est constitué par une simple plaque 7 portant l'original 2 sur sa face supérieure et que la fenêtre 4 a une section qui diminue du bas vers le haut dans le sens de propagation de la lumière émise par la source lumineuse, ce qui évite des réflexions parasites.

Quant au châssis 5, qui est disposé au-dessus de la plaque 7, il comprend un corps 8 pourvu d'un évidement rectangulaire central 9 situé en face de la fenêtre 4 et dont les dimensions sont supérieures à celles de cette dernière, un joint d'étanchéité annulaire 10 fixé autour de l'évidement 9 sur la face inférieure du corps 8, et une membrane 11 fixée sur la face supérieure du corps 8, cette membrane pénétrant dans l'évidement 9 et s'avançant plus près de la plaque 7 que le joint 10 sous l'action des moyens presseurs 6.

Par ailleurs, les moyens presseurs 6 sont constitués par une plaquette s'étendant parallèlement à la plaque 7 et portant sur sa face supérieure des tiges 12 autour desquelles sont disposés des ressorts hélicoïdaux 13.

Les tiges 12 traversent librement un couvercle 14 reposant sur la périphérie de la membrane 11 par l'intermédiaire d'un joint 15, le couvercle 14 et la membrane 11 étant fixés sur le corps 8 par des organes de fixation communs 16 tels que des vis ou des boulons.

Les ressorts 13 sont comprimés entre le couvercle 14 et la plaquette 6 et maintiennent donc cette dernière contre la face supérieure de la membrane 11.

Lorsque l'on déplace la plaque 7 et le châssis 5 de leur position inactive visible sur les figures 1 et 2 à leur position active visible sur la figure 4, la plaquette 6 presse d'abord la membrane 11 contre le film 1 qui presse à son tour l'original 2 contre la plaque 7, après quoi elle comprime les ressorts 13 jusqu'à ce que le joint 10 vienne s'appuyer de façon étanche contre la plaque 7.

Comme on peut le voir sur les figures 1 et 2, le corps 8 renferme une chambre 17 autour de l'évidement 9, cette chambre étant apte à être reliée à une source à vide (non représentée) par une conduite 18 et communiquant, par l'intermédiaire d'une série d'orifices 19, avec la chambre 20 (visible sur la figure 4) qui est délimitée par la plaque 7, le corps 8, le joint 10 et la membrane 11 lorsque le châssis 5 et le support 7 sont dans leur position active.

En reliant la chambre 17 à la source à vide lorsque le châssis et le support sont dans leur position active, on crée dans la chambre 20 une dépression qui permet d'éliminer les bulles d'air emprisonnées entre le film 1 et l'original 2 et d'appliquer ces derniers intimement l'un contre l'autre, ce qui est indispensable pour reproduire des images d'excellente qualité.

Pour être complet, on précisera que la face inférieure de la plaquette 6 est pourvue de rainures 21 se coupant à angle droit. Ces rainures évitent que des bulles d'air soient emprisonnées entre la membrane 11 et la plaquette 6 et empêchent le film 1 et l'original 2 de venir en contact intime.

Le dispositif de reproduction qui vient d'être décrit doit être utilisé en chambre noire afin d'éviter la surexposition du film 1 sous l'action de la lumière naturelle ou d'une lumière artificielle.

Son fonctionnement est particulièrement simple. Pour reproduire sur le film 1 une image formée sur l'original 2, il suffit en effet d'effectuer les opérations suivantes :
- fixation de l'original 2 devant la fenêtre 4 ;
- insertion du film 1 entre le châssis 5 et la plaque 7 ;
- déplacement du châssis 5 et de la plaque 7 de leur position inactive à leur position active ;
- liaison avec la source à vide de la chambre délimitée par le châssis 5 et la plaque 7 lorsque ceux-ci sont dans leur position active ; et
- exposition du film 1 à travers l'original 2.

Si on désire maintenant reproduire sur le film 1 une image formée sur un second original 2, on déplace longitudinalement le film d'une distance correspondant à la longueur de l'original, on remplace le premier original par le second que l'on fixe devant la fenêtre 4, on place le châssis 5 et la plaque 7 dans leur position active, on relie la chambre délimitée par ces derniers avec la source à vide et on expose le film 1 à travers le second original.

On pourra bien entendu procéder au développement lorsque le nombre voulu d'images aura été reproduit sur le film.

Pour être complet, on précisera que la membrane 11 pourrait être revêtue sur sa face tournée vers le film d'une matière perméable à l'air destinée, lors du déplacement de la plaque et du châssis de leur position inactive à leur position active, à assurer une pression plus uniforme sur la totalité des surfaces en regard du film et de l'original, afin d'éliminer parfaitement les bulles d'air. Cette disposition est plus particulièrement utile pour la reproduction de grands formats.

## Revendications

1. Dispositif pour la reproduction d'images, par contact, sur un film photographique vierge (1) à partir d'un original transparent (2), notamment d'un négatif photographique ou d'une diapositive, le dispositif comprenant une source lumineuse pour impressionner le film à travers l'original; une plaque (7) pourvue d'une fenêtre (4), l'original étant destiné à obturer la fenêtre de la plaque tandis que le film est destiné à être placé derrière l'original par rapport à la source lumineuse ; un châssis (5) situé derrière la plaque par rapport à la source lumineuse et comportant un corps (8) pourvu d'un évidement central (9) situé en face de la fenêtre; des moyens presseurs (6) prévus sur le châssis pénetrant dans l'évidement, la plaque et le châssis étant déplaçables l'un par rapport à l'autre entre une position inactive dans laquelle les moyens presseurs n'exercent pas d'action, ni sur le film, ni sur l'original, et une position active dans laquelle les moyens presseurs appliquent le film contre l'original et celui-ci contre la plaque ; et des moyens pour créer une dépression entre l'original et le film lorsque la plaque et le châssis sont dans leur position active ; caractérisé en ce que les dimensions de l'évidement central sont supérieures à celles de la fenêtre; le châssis (5) comprend un joint d'étanchéité annulaire (10) fixé autour de l'évidement (9), sur la partie du corps (8) qui est tournée vers la plaque (7), et une membrane (11) fixée au niveau de la partie du corps qui est à l'opposé de la plaque et faisant saillie hors de l'évidement de manière à s'avancer sous l'action des moyens presseurs (6), plus près de la plaque dans la position active que dans la position inactive la plaque, le corps, le joint et la membrane délimitant, dans la position active de la plaque et du châssis, une chambre de dépression (20) apte à être reliée à une source à vide.

2. Dispositif selon la revendication 1, caractérisé en ce que les moyens presseurs (6) sont constitués par une plaquette maintenue par des organes élastiques (13) contre la face de la membrane (11) qui est à l'opposé du film (1) et de l'original (2).

3. Dispositif selon la revendication 2, caractérisé en ce que la plaquette (6) porte sur sa face opposée à la membrane (11) des tiges (12) autour desquelles sont disposés des ressorts hélicoîdaux (13), ces tiges traversant librement un couvercle (14) fixé sur la partie du corps (8) qui est à l'opposé du joint (10) tandis que les ressorts (13) sont comprimés entre la plaquette (6) et le couvercle (14).

4. Dispositif selon la revendication 3, caractérisé en ce que le couvercle (14) et la membrane (11) sont fixés sur le corps (8) du châssis (5) par des organes de fixation communs (16).

5. Dispositif selon la revendication 1, caractérisé en ce que le corps (8) du châssis (5) renferme autour de l'évidement (9) une chambre tampon (17) apte à être reliée à la source à vide, la partie du corps du châssis qui délimite la chambre de dépression (20) étant pourvue d'une série d'orifices (19) destinés à relier cette dernière à la chambre tampon (17).

## Patentansprüche

1. Vorrichtung zur Kontakt-Bildwiedergabe auf einem unbelichteten Photofilm (1) ausgehend von einer Tranparentvorlage (2), insbesondere von einem photographischen Negativ oder einem Dia, bestehend aus einer Lichtquelle zum Belichten des Films durch die Vorlage hindurch ; einer Platte (7) mit einem Fenster (4), wobei die Vorlage das Fenster der Platte verschließen soll, während der Film bezüglich der Lichtquelle hinter die Vorlage gelegt werden soll ; einem Rahmen (5), der bezüglich der Lichtquelle hinter die Platte liegt und einen Körper (8) mit einer mittigen, dem Fenster gegenüberliegenden Ausnehmung (9) aufweist ; auf dem Rahmen vorgesehenen, in die Ausnehmung eindringenden Andrückmitteln (6), wobei die Platte und der Rahmen relativ zu einander verschiebbar sind, und zwar zwischen einer unwirksamen Stellung, in der die Andrückmittel keine Wirkung ausüben, ob auf den Film oder auf die Vorlage, und einer wirksamen Stellung, in der die Andrückmittel den Film an die Vorlage sowie diese an die Platte anlegen ; und Mitteln zur Erzeugung eines Unterdrucks zwischen Vorlage und Film, wenn die Platte und der Rahmen in der wirksamen Stellung sind ; dadurch gekennzeichnet, daß die mittige Ausnehmung größer dimensioniert als das Fenster ist ; der Rahmen (5) eine Ringdichtung (10) aufweist, die um die Ausnehmung (9) herum am der Platte (7) zugewandten Teil des Körpers (8) befestigt ist, sowie eine Membran (11), die am der Platte abgewandten Teil des Körpers befestigt ist und derart aus der Ausnehmung herausragt, daß sie unter der Wirkung der Andrückmittel (6) näher an die Platte in der wirksamen Stellung als in der unwirksamen Stellung tritt, wobei die Platte, der Körper, die Dichtung und die Membran in der wirksamen Stellung der Platte und des Rahmens eine Unterdruckkammer (20) begrenzen, die mit einer Vakuumquelle verbunden werden kann.

2. Vorrichtung nach Anspruch 1, dadurch gekennzeichnet, daß die Andrückmittel (6) aus einem Plättchen bestehen, das durch federnde Körper (13) gegen die dem Film (1) und der Vorlage (2) abgewandte Seite der Membran (11) gehalten wird.

3. Vorrichtung nach Anspruch 2, dadurch gekennzeichnet, daß das Plättchen (6) auf seiner der Membran (11) abgewandten Seite Stifte (12) aufweist, um die Schraubenfedern (13) angeordnet sind, wobei die Stifte durch einen Deckel (14) frei hindurchgehen, der am der Dichtung (10) abgewandten Teil des Körpers (8) befestigt ist, während die Federn (13) zwischen dem Plättchen (6) und dem Deckel (14) zusammengepreßt werden.

4. Vorrichtung nach Anspruch 3, dadurch gekennzeichnet, daß der Deckel (14) und die Membran (11) durch gemeinsame Befestigungsmittel (16) am Körper (8) des Rahmens (5) befestigt sind.

5. Vorrichtung nach Anspruch 1, dadurch gekennzeichnet, daß der Körper (8) des Rahmens (5) um die Ausnehmung (9) herum eine Pufferkammer (17) enhält, die mit der Vakuumquelle verbunden werden kann, wobei der die Unterdruckkammer (20) begrenzende Teil des Rahmenkörpers mit einer Reihe Öffnungen (19) zum Verbinden der Unterdruckkammer (20) mit der Pufferkammer (17) versehen ist.

## Claims

1. Device for reproducing images, by contact, on an unexposed photographic film (1) from a transparent original (2), particularly a photographic negative or a slide, the device comprising a light source to print the film through the original ; a plate (7) provided with a window (4), the original being intended to block the plate window, while the film is intended to be placed behind the original with respect to the light source ; a frame (5) located behind the plate with respect to the light source and comprising a body (8) provided with a central recess (9) located opposite the window ; pressing means provided on the frame which penetrate into the recess (6), the plate and the frame being displaceable in relation to one another between an inactive position in which the pressing means exercise no action on the film or the original, and an active position in which the pressing means press the film against the original, and the latter against the plate ; and means for creating a negative pressure between the original and the film when the plate and the frame are in their active positions, characterized in that the dimensions of the central recess are greater than those of the window ; the frame (5) comprises an annular seal (10) fixed around the recess (9), on the portion of the body that is turned towards the plate (7), and a membrane (11) fixed at the portion of the body that faces away from the plate and projecting out of the recess in such a way that, under the action of the pressing means (6), it comes closer to the plate in the active position than in the inactive position, the plate, the body, the seal and the membrane delimiting, in the active positions of the support and the frame, a negative pressure chamber (20) suitable for connection to a vacuum source.

2. Device according to claim 1, characterized in that the pressing means (6) are formed by a small plate held by elastic members (13) against the face of the membrane (11) which faces away from the film (1) and the original (2).

3. Device according to claim 2, characterized in that the small plate (6) bears, on its face opposite the membrane (11), rods (12) around which helicoidal springs (13) are disposed, these rods freely passing through a cover (14) fixed to the portion of the body (8) that faces away from the seal (10), while the springs (13) are compressed between the small plate (6) and the cover (14).

4. Device according to claim 3, characterized in that the cover (14) and the membrane (11) are fixed to the body (8) of the frame (5) by common fixing members (16).

5. Device according to claim 1, characterized in that the body (8) of the frame (5) contains, around the recess (9), a buffer chamber (17) suitable for connection to the vacuum source, the portion of the body of the frame that delimits the negative pressure chamber (20) being provided with a series of orifices (19) designed to connect the latter to the buffer chamber (17).
